# EUROPEAN PATENT SPECIFICATION

(11) **EP 3 210 679 B1**
(45) Date of publication and mention of the grant of the patent: **30.09.2020**
(21) Application number: 16461505.6
(22) Date of filing: 25.02.2016
(51) Int. Cl.: F27B 7/20, F27D 99/00, B09B 3/00, A62D 3/178, A62D 101/40, H05B 6/80

(54) **A METHOD FOR DISPOSING OF ASBESTOS-CONTAINING WASTE AND A SYSTEM FOR DISPOSING OF ASBESTOS-CONTAINING WASTE**
VERFAHREN ZUM ENTSORGEN VON ASBESTHALTIGEN ABFÄLLEN UND SYSTEM ZUR ENTSORGUNG VON ASBESTHALTIGEN ABFÄLLEN
PROCÉDÉ D'ÉLIMINATION DE DÉCHETS CONTENANT DE L'AMIANTE ET SYSTÈME D'ÉLIMINATION DE DÉCHETS CONTENANT DE L'AMIANTE

(43) Date of publication of application: 30.08.2017
(73) Proprietor: MTT Technologies Sp. z.o.o., 02-703 Warszawa (PL)
(72) Inventor: Parosa, Ryszard, 53-213 Wroclaw (PL)
(74) Representative: Kancelaria Eupatent.pl Sp. z.o.o

(56) References cited:
- WO-A1-97/33840
- WO-A2-2007/053046
- JP-A- 2013 022 576
- LEONELLI C ET AL: "Microwave thermal inertisation of asbestos containing waste and its recycling in traditional ceramics", JOURNAL OF HAZARDOUS MATERIALS, ELSEVIER, AMSTERDAM, NL, vol. 135, no. 1-3, 31 July 2006 (2006-07-31), pages 149-155, XP027884677, ISSN: 0304-3894 [retrieved on 2006-07-31]

## Description

### TECHNICAL FIELD

The present disclosure relates to a method for disposing of asbestos-containing waste and a system for disposing of asbestos-containing waste.

### BACKGROUND

Asbestos is a material that has been widely used in building industry and other applications for long time. Asbestos is composed of very thin and durable fibers, which constitute serious health hazards when inhaled by an organism.

There is a tendency to remove asbestos-containing material from human environment and to neutralize it.

There are known methods for disposing asbestos-containing elements by burying them in special landfills protected by layers of foil, by chemical digestion in mixtures of acids or by thermally changing their structure from fibrous to amorphous or by vitrification.

A US patent US8552248 discloses a method for conversion of a material including asbestos that includes: crumbling a fibrous structure of the material such that the material is crumbled into smaller particles; transporting the crumbled material into a microwave reactor and mixing with an agent facilitating heating of the material; heating the crumbled material by beams of focused polarized electromagnetic radiation in a microwave band and maintaining the smaller particles at a temperature for a period of time for structural transformation; removing the heated crumbled material from the microwave reactor and cooling the material; and subjecting the cooled crumbled material to a process of final crumbling. Such a solution has a drawback that the disposed asbestos-containing material is heated only by means of a microwave energy. Therefore, high power microwave generators need to be installed, which leads to high energy consumption due to low efficiency of microwave generators (typically, below 70%). Moreover, the thermal energy produced by the generators is not utilized, but dissipated to atmosphere. Furthermore, the effect of formation of standing waves in the processing chamber in which the material is heated with microwaves, causes a non-uniform heating of the waste. Moreover, the known column reactors for asbestos disposal, e.g. such as described in the US patent US8552248, do not provide a controlled displacement of material, so the material under high temperature cakes and blocks its motion towards the bottom of the reactor.

Patent US8552248, does not provide a controlled displacement of material, so the material under high temperature cakes and blocks its motion towards the bottom of the reactor.

A PCT patent application WO2007053046 discloses a method of utilising asbestos-containing materials comprising heating the asbestos containing materials and changing their structure from crystal forbour to that deprived of fiber structure using electromagnetic microwave field.

A PCT patent application WO9733840 discloses a method for the vitrification processing of harmful fibre waste, particularly asbestos-containing waste from buildings, wherein the waste to be processed is first coarsely ground and preheated.

The known solutions for thermal disposal of asbestos have a series of other drawbacks. Remelting of asbestos waste by means of gas or oil burners requires heating the waste up to very high temperatures (above 1400°C), wherein such heating is difficult due to low thermal conductivity of the disposed material, therefore it is difficult to heat the whole volume of the material. The thermal energy accumulated in the hot material after the process of neutralization of fibers is not utilized, which reduces the energetic efficiency of the process.

Moreover, the known solutions do not provide a system for capturing fine asbestos fibers entrained in a stream of exhaust gases. As a result, there is a risk of emission of dangerous fibers to the environment of the reactor, which can be dangerous for the personnel.

### SUMMARY

The object of the invention is a method and system for disposing of asbestos-containing material by heating the material with microwave energy, according to the appended claims.

The presented technology enables conducting the process of transformation of the crystalline structure of asbestos fibers by using microwave energy in a rotating drum, wherein the material is displaced. After that process, the material is intensely cooled in a stream of cold air or in water. The exhaust gases from the drum are directed to a high-temperature reactor with ceramic elements which are heated by microwaves to a temperature from 1200°C to 1400°C, wherein the solid fractions are melted, and the impurities in the gas are burnt. The hot air from the exhaust gases burning system is directed to a heat exchanger, from which heated air is input to the drum.

The method further comprises pouring the asbestos-containing material heated inside the drum to a cooling chamber which is preferably at least partially filled with water.

The method further comprises directing a stream of hot gases from the drum through a cyclone to a vertical chamber filled with ceramic microwave-absorbing elements which are heated by microwave energy to a temperature from 1200°C to 1400°C.

Preferably, the method further comprises directing a stream of hot air from the vertical chamber to a heat exchanger to heat a stream of air directed to the pre-heating chamber.

Preferably, the method further comprises generating inside the pre-heating chamber and the drum, an underpressure of 10hPa to 50hPa below the atmospheric pressure, by means of an exhaust ventilator connected to an outlet of the heat exchanger.

There is also disclosed a system for disposing of asbestos-containing material by heating the material with microwave energy, characterized in that it comprises: - an pre-heating chamber comprising at least one burner powered by a liquid or gaseous fuel and configured to heat crumbled asbestos-containing material in the pre-heating chamber to a temperature from 900°C to 1000°C; and a drum with inner ceramic walls, having its inlet connected with the outlet of the pre-heating chamber, comprising a microwave radiator configured to heat the asbestos-containing material inside the drum with the microwave energy to a temperature from 1000°C to 1200°C.

Preferably, at least one tubular radiator is located inside the drum in parallel to the axis of rotation of the drum along the whole length of the drum.

The the material outlet of the drum is connected with a cooling chamber preferably by a tube connected to a ventilator configured to generate a stream of air within the tube.

The exhaust gas outlet of the drum is connected via a cyclone with a vertical chamber filled with ceramic microwave-absorbing elements, to which microwave radiators are connected and configured to heat the ceramic elements to a temperature from 1200°C to 1400°C.

Preferably, the exhaust gas outlet of the vertical chamber is connected to a heat exchanger configured to heat air directed to the pre-heating chamber.

Preferably, the system further comprises an exhaust ventilator connected to the outlet of the heat exchanger and configured to generate underpressure of 10hPa to 50hPa below the atmospheric pressure inside the pre-heating chamber and the drum.

The presented technology enables conducting the process of transformation of the crystalline structure of asbestos fibers by using microwave energy in a rotating drum, wherein the material is displaced. After that process, the material is intensely cooled in a stream of cold air or in water. The exhaust gases from the drum are directed to a high-temperature reactor with ceramic elements which are heated by microwaves to a temperature from 1200°C to 1400°C, wherein the solid fractions are melted, and the impurities in the gas are burnt. The hot air from the exhaust gases burning system is directed to a heat exchanger, from which heated air is input to the drum.

### BRIEF DESCRIPTION OF DRAWINGS

The object of the invention is shown by means of example embodiments in a drawing, in which:
Fig. 1 shows a general flowchart of a method for disposing of asbestos-containing waste.
Fig. 2 shows a system for disposing of asbestos-containing waste.

### DETAILED DESCRIPTION

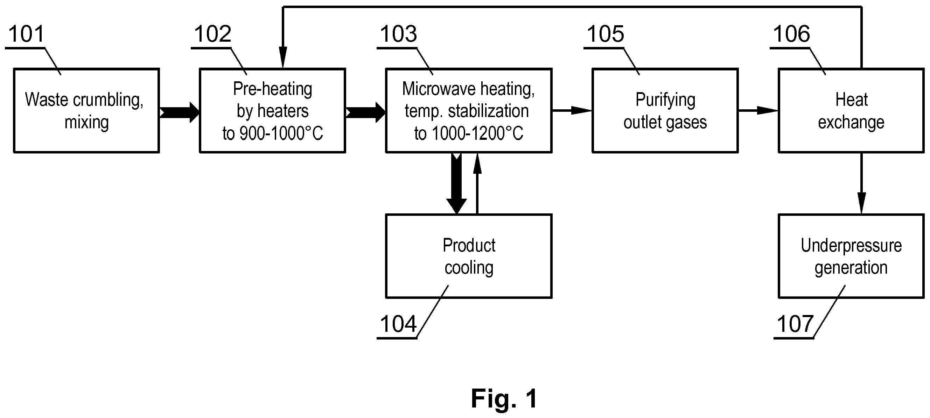

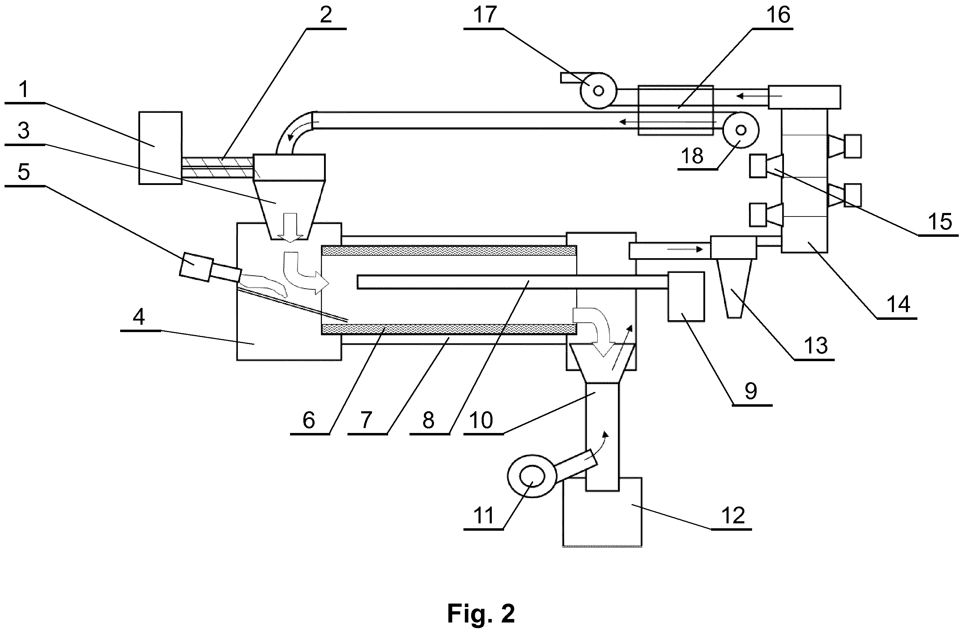

Fig. 1 shows a general flowchart of a method for disposing of asbestos-containing waste material, which may be performed for example by means of a system as shown in Fig. 2.

In step 101, asbestos-containing material is crumbled and mixed with additives. After crumbling in a chamber 1, the crumbled material is transported by a screw feeder 2 with an adjustable feeding velocity, to a chute chamber 3 with a system for supplying additives. Preferably, the additives are used to decrease the temperature of transformation of the fibrous structure into amorphous structure. For example, alkaline substances can be added, such as sodium hydroxide (NaOH) or waterglass to reduce the melting temperature of the mixture. Moreover, cullet (preferably granulated below 0,5cm) can be added in the amount from 5% to 15% by weight to facilitate vitrification of the output material.

Next, in step 102, the crumbled material is introduced into a pre-heating chamber 4, wherein the material is heated with a stream of hot gases from a heat exchanger and additionally with a burner 5 powered with gaseous or liquid fuel (for example oil), up to the temperature of at least 900°C, preferably to the temperature in the range from 900°C to 1000°C.

Next in step 103, the heated material is input to a substantially horizontal rotating drum 6 with an inner ceramic layer and a metal cover 7. During the tumbling of the material inside the drum 6, the material is additionally heated with microwave energy from a tubular radiator 8 located inside the drum and emitting the microwave energy along the drum in the direction of the material moved along the drum. The tubular radiator 8 is substantially located along the whole length of the drum, in parallel to its axis of rotation. A plurality of tubular radiators 8 may be utilized as well. Preferably, the microwave energy is emitted with a frequency of 500MHz to 3GHz. Alternatively, a drum 6 without the metal cover 7 may be used - then the microwave radiator 8 may be located outside the drum. The microwave energy is transferred to the radiator 8 from one or more high-power microwave generators, for example having a power from 25kW to 100kW. The material inside the drum 6 is heated up to a temperature from 1000°C to 1200°C. The drum 6 should be slightly inclined with respect to the horizontal axis, so that the material during the tumbling is dislocated from one end of the drum 6 to the other end, such that it is processed inside the drum within the time from 5 to 15 min. This time can be regulated by adjusting the angle of inclination of the drum 6 or/and the rotational velocity of the drum 6.

In step 104 the material is poured from the drum 6 through a funnel ended with a vertical tube 10, to a cooling chamber comprising a container 12, wherein a cool stream of air is applied to the tube 10 by means of a ventilator 11, which cools the material input to the container 12. Preferably, the container 12 is also cooled, for example by filling the container 12 with cold water. Rapid cooling of the hot material causes its vitrification.

In step 105, the hot air stream from the drum 6 and the air stream from the cooling chamber 12 are directed by a hot cyclone 13 (having external thermal isolation) to a reactor having a form of a vertical chamber 14 filled with ceramic, microwave-absorbant elements, which are heated to a temperature from 1000°C to 1400°C. The ceramic elements may have a form of a torus with an external diameter of 4 to 5cm and internal diameter of 2 to 3 cm. In the chamber 14, asbestos fibers, which have been entrained with the gas stream from the drum 6 and which have not been captured in the cyclone 13, adhere to the hot ceramic elements and melt thereon. The microwave energy for heating the ceramic elements inside the chamber 14 is generated by a set of microwave generators with radiators 15.

In step 106, hot gases leaving the chamber 14 with hot ceramic elements are directed to a ceramic heat exchanger 16, wherein the gases heat the air pumped by a ventilator 18, and that heated air is directed to the pre-heating chamber 4.

The heat exchanger 16 is coupled with a exhaust gases ventilator 17 that has efficiency and a compression ratio that is able to generate in step 107 a small underpressure inside the installation, preferably in the range of 10hPa to 50hPa below the atmospheric pressure.

Due to the application of the pre-heating in step 102 by means of the burner or the set of burners 5, the asbestos-containing material is pre-heated to a high temperature and therefore in the drum 6 it is heated up with the microwave energy. It allows to significantly reduce the consumption of microwaves power in the process of heating of the waste, and to easily obtain the required very high temperatures of the process, even in the range of 1200°C to 1300°C.

In step 103, the material tumbled inside the drum 6 is heated with microwaves. Due to displacement of this material in an intensive microwave field, the material is uniformly heated for 5 to 15 minutes, which is required for the effectiveness of the process of transformation of structure. The standing waves do not cause negative influence on the displaced material.

Introduction of the microwave energy into the reactor by means of a tubular radiator 8 allows to utilize the drum 6 made of metal with a ceramic filling of the walls inside the drum. In contrast, introduction of the microwave energy according to the solutions known from the state of the art (via the drum walls) caused construction difficulties concerning maintenance of stability and durability of the ceramic elements of the drum 6 of big dimensions. In practice, the prior art systems limited the possibilities of constructing big reactors with ceramic drums having a required high efficiency.

The exhaust gases purification system of step 105 with the hot cyclone 13 and the vertical chamber 14 filled with the ceramic elements heated up to a very high temperature, preferably above 1200°C, allows to efficiently capture and melt the asbestos fibers which are entrained with the exhaust gases stream. Therefore, the presented solution allows to completely eliminate the hazard of emission of the asbestos fibers outside the installation.

The asbestos fibers captured in the cyclone 13 may be placed again in the chamber 1 and undergo the thermal treatment in steps 102-103.

The combination of the system of purification of exhaust gases from the vertical chamber 14 in step 105 with the heat exchanger in step 106, allows to reuse a significant amount of the thermal energy in the form of the hot gases stream introduced into the reactor and to facilitate the process of heating the waste in step 102. Therefore, an effective recuperation system is applied.

The small underpressure of step 107 generated within the installation, by the exhaust ventilator 17, eliminates the risk of the fibers being emitted outside the installation.

## Claims

1. A method for disposing of asbestos-containing material by heating the asbestos-containing material with microwave energy, the method being **characterized by**:
- mixing (101) crumbled asbestos-containing material with a cullet;
- heating (102) the crumbled asbestos-containing material in a pre-heating chamber (4) by means of at least one burner (5) powered by liquid fuel or gaseous fuel to a temperature from 900°C to 1000°C; and
- inputting the heated asbestos-containing material into a drum (6) with inner ceramic walls and heating the asbestos-containing material therein with microwave energy to a temperature from 1000°C to 1200°C;
- pouring the asbestos-containing material heated inside the drum (6) to a cooling chamber (12);
- directing a stream of hot gases from the drum (6) through a cyclone (13) to a vertical chamber (14) filled with ceramic microwave-absorbing elements, wherein the microwave-absorbing elements are heated by microwave energy to a temperature from 1200°C to 1400°C.

2. The method according to claim 1, further comprising mixing (101) the crumbled asbestos-containing material with alkaline additives.

3. The method according to any of previous claims, comprising heating the asbestos-containing material inside the drum (6) for at least 5 minutes.

4. The method according to any of previous claims, comprising heating the asbestos-containing material inside the drum (6) by microwave energy radiated with a frequency from 500MHz to 3GHz.

5. The method according to any of previous claims, further comprising pouring the asbestos-containing material heated inside the drum (6) to the cooling chamber (12) via a tube (10) with a counter-stream of air flowing therein.

6. The method according to any of previous claims, wherein the cooling chamber (12) is at least partially filled with water.

7. The method according to claim 1, further comprising directing a stream of hot air from the vertical chamber (14) to a heat exchanger (16) to heat a stream of air directed to the pre-heating chamber (4).

8. The method according to claim 7, further comprising generating inside the pre-heating chamber (4) and the drum (6), an underpressure of 10hPa to 50hPa below the atmospheric pressure, by means of an exhaust ventilator (17) connected to an outlet of the heat exchanger (16).

9. A system for disposing of asbestos-containing material by heating the asbestos-containing material with microwave energy, **characterized in that** it comprises:
- a chamber (1) for crumbling the asbestos-containing material;
- a chute chamber (3) comprising a system for supplying a cullet to the crumbled asbestos-containing material;
- an pre-heating chamber (4) comprising at least one burner (5) powered by a liquid or gaseous fuel and configured to heat the crumbled asbestos-containing material in the pre-heating chamber (4) to a temperature from 900°C to 1000°C;
- a drum (6) with inner ceramic walls, having its inlet connected with an outlet of the pre-heating chamber (4), comprising a microwave radiator (8) configured to heat the asbestos-containing material inside the drum (6) with microwave energy to a temperature from 1000°C to 1200°C;
- a cooling chamber (12) having its inlet connected with a material outlet of the drum (6) for receiving the asbestos-containing material heated inside the drum (6);
- a cyclone (13) having its inlet connected with an exhaust gas outlet of the drum (6) for receiving a stream of hot exhaust gases from the drum (6) and connected with a vertical chamber (14) filled with ceramic microwave-absorbing elements, to which microwave radiators (15) are connected and configured to heat the ceramic microwave-absorbing elements to a temperature from 1200°C to 1400°C.

10. The system according to claim 9, wherein at least one tubular radiator (8) is located inside the drum (6) in parallel to an axis of rotation of the drum (6) along a whole length of the drum (6).

11. The system according to any of claims 9-10, wherein the material outlet of the drum (6) is connected with a cooling chamber (12) by a tube (10) connected to a ventilator (11) configured to generate a stream of air within the tube (10).

12. The system according to claim 9, wherein an exhaust gas outlet of the vertical chamber (14) is connected to a heat exchanger (16) configured to heat air directed to the pre-heating chamber (4).

13. The system according to claim 12, further comprising an exhaust ventilator (17) connected to an outlet of the heat exchanger (16) and configured to generate an underpressure of 10hPa to 50hPa below the atmospheric pressure inside the pre-heating chamber (4) and the drum (6).

## Patentansprüche

1. Verfahren zum Entsorgen von asbesthaltigem Material durch Erhitzen des asbesthaltigen Materials mit Mikrowellenenergie, wobei das Verfahren **gekennzeichnet ist durch**:
- Mischen (101) von zerbröckeltem asbesthaltigem Material mit einem Scherbenanteil;
- Erhitzen (102) des zerbröckeltem asbesthaltigen Materials in einer Vorerhitzungskammer (4) mittels mindestens eines Brenners (5), der **durch** flüssigen Brennstoff oder gasförmigen Brennstoff betrieben wird, auf eine Temperatur von 900 °C bis 1000 °C; und
- Einfüllen des erhitzten asbesthaltigen Materials in eine Trommel (6) mit Keramikinnenwänden und Erhitzen des asbesthaltigen Materials darin mit Mikrowellenenergie auf eine Temperatur von 1000 °C bis 1200 °C;
- Ausgießen des in der Trommel (6) erhitzten asbesthaltigen Materials in eine Abkühlkammer (12);
- Leiten eines Stroms von heißen Gasen aus der Trommel (6) **durch** einen Zyklon (13) zu einer vertikalen Kammer (14), die mit keramischen Mikrowellen absorbierenden Elementen gefüllt ist, wobei die Mikrowellen absorbierenden Elemente **durch** Mikrowellenenergie auf eine Temperatur von 1200 °C bis 1400 °C erhitzt werden.

2. Verfahren nach Anspruch 1, ferner aufweisend ein Mischen (101) des zerbröckelten asbesthaltigen Materials mit alkalischen Zusätzen.

3. Verfahren nach einem der vorhergehenden Ansprüche, aufweisend ein Erhitzen des asbesthaltigen Materials in der Trommel (6) für mindestens 5 Minuten.

4. Verfahren nach einem der vorhergehenden Ansprüche, aufweisend ein Erhizuen des asbesthaltigen Materialn in der Trommel (6) durch Mikrowellenenergie, die mit einer Frequenz von 500 MHz bis 3 GHz abgestrahlt wird.

5. Verfahren nach einem der vorhergehenden Ansprüche, ferner aufweisend ein Ausgießen des in der Trommel (6) erhitzten asbesthaltigen Materials in die Abkühlkammer (12) über ein Rohr (10) mit einem darin fließenden Luftgegenstrom.

6. Verfahren nach einem der vorhergehenden Ansprüche, wobei die Abkühlkammer (12) zumindest teilweise mit Wasser gefüllt ist.

7. Verfahren nach Anspruch 1, ferner aufweisend ein Leiten eines Stroms von heißer Luft von der vertikalen Kammer (14) zu einem Wärmetauscher (16), um einen Luftstrom zu erwärmen, der zu der Vorerhitzungskammer (4) geleitet wird.

8. Verfahren nach Anspruch 7, ferner aufweisend ein Erzeugen eines Unterdrucks von 10 hPa bis 50 hPa unter Atmosphärendruck in der Vorerhitzungskammer (4) und der Trommel (6) mittels eines Abluftventilators (17), der mit einem Auslass des Wärmetauschers (16) verbunden ist.

9. System zum Entsorgen von asbesthaltigem Material durch Erhitzen des asbesthaltigen Materials mit Mikrowellenenergie, **dadurch gekennzeichnet, dass** es aufweist:
- eine Kammer (1) zum Zerbröckeln des asbesthaltigen Materials;
- eine Schüttkammer (3), die ein System zum Zuführen eines Scherbenanteils zu dem zerbröckelten asbesthaltigen Materials aufweist;
- eine Vorerhitzungskammer (4), die mindestens einen Brenner (5) aufweist, der durch einen flüssigen oder gasförmigen Brennstoff betrieben wird und dafür ausgelegt ist, das zerbröckelte asbesthaltige Material in der Vorerhitzungskammer (4) auf eine Temperatur von 900 °C bis 1000 °C zu erhitzen;
- eine Trommel (6) mit Keramikinnenwänden, deren Einlass mit einem Auslass der Vorerhitzungskammer (4) verbunden ist, die einen Mikrowellenstrahler (8) aufweist und dafür ausgelegt ist, das asbesthaltige Materials in der Trommel (6) mit Mikrowellenenergie auf eine Temperatur von 1000 °C bis 1200 °C zu erhitzen;
- eine Abkühlkammer (12), deren Einlass mit einem Materialauslass der Trommel (6) verbunden ist, um in der Trommel (6) erhitztes asbesthaltiges Material aufzunehmen;
- einen Zyklon (13), dessen Einlass mit einem Abgasauslass der Trommel (6) zum Aufnehmen eines Stroms von heißen Abgasen aus der Trommel (6) verbunden ist, und mit einer vertikalen, mit Mikrowellen absorbierenden Elementen gefüllten Kammer (14) verbunden ist, mit der Mikrowellenstrahler (15) verbunden und dafür ausgelegt sind, die Mikrowellen absorbierenden Keramikelemente auf eine Temperatur von 1200 °C bis 1400 °C zu erhitzen.

10. System nach Anspruch 9, wobei sich mindestens ein rohrförmiger Strahler (8) in der Trommel (6) parallel zur Rotationsachse der Trommel (6) entlang einer gesamten Länge der Trommel (6) befindet.

11. System nach einem der Ansprüche 9 bis 10, wobei der Materialauslass der Trommel (6) mit einer Abkühlkammer (12) über ein Rohr (10) verbunden ist, das mit einem Ventilator (11) verbunden ist, der dafür ausgelegt ist, einen Luftstrom in dem Rohr (10) zu erzeugen.

12. Verfahren nach Anspruch 9, wobei ein Abgasauslass der vertikalen Kammer (14) mit einem Wärmetauscher (16) verbunden ist, der dafür ausgelegt ist, zu der Vorerhitzungskammer (4) geleitete Luft zu erwärmen.

13. System nach Anspruch 12, ferner aufweisend einen Abluftventilator (17), der mit einem Auslass des Wärmetauschers (16) verbunden ist und dafür ausgelegt ist, einen Unterdruck von 10 hPa bis 50 hPa unter Atmosphärendruck in der Vorerhitzungskammer (4) und der Trommel (6) zu erzeugen.

## Revendications

1. Procédé d'élimination d'un matériau contenant de l'amiante en chauffant le matériau contenant de l'amiante par énergie microondes, le procédé étant **caractérisé par** :
- le mélange (101) du matériau contenant de l'amiante émietté avec du calcin ;
- la chauffe (102) du matériau contenant de l'amiante émietté dans une chambre de pré-chauffe (4) au moyen d'au moins un brûleur (5) alimenté par du carburant liquide ou gazeux à une température de 900° C à 1000° C ; et
- l'insertion du matériau contenant de l'amiante émietté dans un tambour (6) avec des parois internes en céramique et la chauffe du matériau contenant de l'amiante émietté dans celui-ci avec une énergie microondes à une température de 1000° C à 1200° C ;
- le déversement du matériau contenant de l'amiante chauffé à l'intérieur du tambour (6) dans une chambre de refroidissement (12) ;
- la direction d'un flux de gaz chauds en provenance du tambour (6) à travers un cyclone (13) jusqu'à une chambre verticale (14) remplie d'éléments d'absorption de microondes en céramique, lesquels éléments d'absorption de micro-ondes sont chauffés par énergie microondes à une température de 1200° C à 1400° C.

2. Procédé selon la revendication 1, comprenant en outre le mélange (101) du matériau contenant de l'amiante émietté à des additifs alcalins.

3. Procédé selon l'une quelconque des revendications précédentes, comprenant la chauffe du matériau contenant de l'amiante à l'intérieur du tambour (6) pendant au moins 5 minutes.

4. Procédé selon l'une quelconque des revendications précédentes, comprenant la chauffe du matériau contenant de l'amiante à l'intérieur du tambour (6) par énergie microondes à une fréquence de 500 MHz à 3 GHz.

5. Procédé selon l'une quelconque des revendications précédentes, comprenant en outre le déversement du matériau contenant de l'amiante chauffé à l'intérieur du tambour (6) dans la chambre de refroidissement (12) via un tube (10) avec un contre-flux d'air circulant dans celui-ci.

6. Procédé selon l'une quelconque des revendications précédentes, dans lequel la chambre de refroidissement (12) est au moins partiellement remplie d'eau.

7. Procédé selon la revendication 1, comprenant en outre la direction d'un flux d'air chaud en provenance de la chambre verticale (14) vers un échangeur thermique (16) pour chauffer un flux d'air dirigé vers la chambre de pré-chauffe (4).

8. Procédé selon la revendication 7, comprenant en outre la génération à l'intérieur de la chambre de pré-chauffe (4) et du tambour (6), d'une sous-pression de 10 hPa à 50 hPa sous la pression atmosphérique, au moyen d'un ventilateur d'échappement (17) connecté à une évacuation de l'échangeur thermique (16).

9. Système d'élimination d'un matériau contenant de l'amiante en chauffant le matériau contenant de l'amiante par énergie microondes, **caractérisé en ce qu'**il comprend :
- une chambre (1) d'émiettage du matériau contenant de l'amiante ;
- une chambre de coulée (3) comprenant un système permettant d'amener du calcin dans le matériau contenant de l'amiante émietté ;
- une chambre de pré-chauffe (4) comprenant au moins un brûleur (5) alimenté par un carburant liquide ou gazeux et configuré pour chauffer le matériau contenant de l'amiante émietté dans la chambre de pré-chauffe (4) à une température de 900° C à 1000° C ;
- un tambour (6) avec des parois internes en céramique, ayant son admission connectée à une évacuation de la chambre de pré-chauffe (4), comprenant un radiateur microondes (8) configuré pour chauffer le matériau contenant de l'amiante à l'intérieur du tambour (6) par énergie microondes à une température de 1000° C à 1200° C ;
- une chambre de refroidissement (12) ayant son admission connectée à une évacuation de matériau du tambour (6) afin de recevoir le matériau contenant de l'amiante chauffé à l'intérieur du tambour (6) ;
- un cyclone (13) ayant son admission connectée à une évacuation de gaz d'échappement du tambour (6) afin de recevoir un flux de gaz d'échappement chauds en provenance du tambour (6) et connecté à une chambre verticale (14) remplie d'éléments d'absorption de microondes en céramique, auxquels des radiateurs microondes (15) sont connectés et configurés pour chauffer les éléments d'absorption de microondes en céramique à une température de 1200° C à 1400° C.

10. Système selon la revendication 9, dans lequel au moins un radiateur tubulaire (8) se trouve à l'intérieur du tambour (6) en parallèle à l'axe de rotation du tambour (6) sur toute la longueur du tambour (6).

11. Système selon l'une quelconque des revendications 9 à 10, dans lequel l'évacuation de matériau du tambour (6) est connectée à une chambre de refroidissement (12) par un tube (10) connecté à un ventilateur (11) configuré pour générer un flux d'air à l'intérieur du tube (10).

12. Système selon la revendication 9, dans lequel une évacuation de gaz d'échappement de la chambre verticale (14) est connectée à un échangeur thermique (16) configuré pour chauffer l'air dirigé vers la chambre de pré-chauffe (4).

13. Système selon la revendication 12, comprenant en outre un ventilateur d'échappement (17) connecté à une évacuation de l'échangeur thermique (16) et configuré pour générer une sous-pression de 10 hPa à 50 hPa sous la pression atmosphérique à l'intérieur de la chambre de pré-chauffe (4) et du tambour (6).
